# EUROPEAN PATENT APPLICATION

(11) **EP 4 563 423 A1**
(43) Date of publication of application: **04.06.2025**
(21) Application number: 23212653.2
(22) Date of filing: 28.11.2023
(51) Int. Cl.: B60T 7/14, B60N 2/00, B60T 7/12

(54) **PARKING BRAKE CONTROL ARRANGEMENT**

(71) Applicant: VOLVO TRUCK CORPORATION, 405 08 Göteborg (SE)
(72) Inventor: JEYAKAR M R, Amarnath, 627859 Surandai (IN); ANGADI, Sunil, 580004 Dharwad (IN)
(74) Representative: Kransell & Wennborg KB

(57) **Abstract**

A parking brake control arrangement (9) for controlling operation of a parking brake (5) of a vehicle (1), configured to: receive a first indication (15) of whether or not a driver of the vehicle (1) is present in a driver's seat of the vehicle (1); receive a second indication (17) of whether or not the vehicle being in motion; receive a third indication (19) of whether or not the vehicle (1) is in a towing mode; and control, when the first indication (15) indicates that the driver is absent from the driver's seat, the second indication (17) indicates that the vehicle (1) is in movement, and the third indication (19) indicates that the vehicle (1) is not in the towing mode, the parking brake (5) of the vehicle (1) from a disengaged state to an engaged state.

## Description

### TECHNICAL FIELD

The disclosure relates generally to vehicle sub-system control. In particular aspects, the disclosure relates to a parking brake control arrangement. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Various vehicles, in particular various heavy duty vehicles, are provided with systems for automatically activating the parking brake if it is determined that the driver is not in the driver's seat.

It would be desirable to provide for improved automatic activation of the parking brake of a vehicle.

### SUMMARY

According to a first aspect of the disclosure, there is provided a parking brake control arrangement for controlling operation of a parking brake of a vehicle, configured to: receive a first indication of whether or not a driver of the vehicle is present in a driver's seat of the vehicle; receive a second indication of whether or not the vehicle being in motion; receive a third indication of whether or not the vehicle is in a towing mode; and control, when the first indication indicates that the driver is absent from the driver's seat, the second indication indicates that the vehicle is in movement, and the third indication indicates that the vehicle is not in the towing mode, the parking brake of the vehicle from a disengaged state to an engaged state. The first aspect of the disclosure may seek to provide for improved automatic activation of the parking brake of a vehicle. A technical benefit may include that automatic activation of the parking brake may be prevented when it has been indicated that the vehicle is to be towed. Hereby, it can be prevented that the parking brake is engaged when towing starts while the driver is not in the driver's seat of the vehicle. This may in turn reduce the risk of vehicle damage resulting from towing.

Optionally in some examples, including in at least one preferred example, the first indication may indicate that the driver is absent from the driver's seat when a weight sensor in the driver's seat indicates that the driver is likely not sitting in the driver's seat and a seat belt sensor indicates that a seat belt of the driver's seat is unlocked. A technical benefit may include to reduce the risk of an incorrect indication that the driver is absent from the driver's seat, thereby reducing the risk of automatic engagement of the parking brake when the driver is in fact in the seat.

Optionally in some examples, including in at least one preferred example, the parking brake control arrangement may be configured to: control, when the first indication indicates that the driver is absent from the driver's seat, the second indication indicates that the vehicle is in motion, and the third indication indicates that the vehicle is in the towing mode, the parking brake of the vehicle to be in the disengaged state. A technical benefit may include to allow towing of the vehicle with the driver outside the cabin, without the parking brake being automatically engaged. This may reduce the risk of damage to the vehicle that may otherwise occur due to the parking brake being automatically engaged in response to detecting that the driver is not in the cabin.

Optionally in some examples, including in at least one preferred example, the parking brake control arrangement may be configured to: control, when the first indication indicates that the driver is present in the driver's seat, or the second indication indicates that the vehicle is stationary, or the third indication indicates that the vehicle is in the towing mode, the parking brake of the vehicle from the engaged state to the disengaged state. A technical benefit may include to provide an improved combination of safety and convenience, by automatically engaging the parking brake, and then automatically disengaging the parking brake when certain conditions are fulfilled. In particular, the parking brake may be automatically disengaged when it is detected that the driver has returned to the cabin, or when it is detected that a towing state has been activated. The towing state may, for example, be activated by manually operating a switch, or by actuation of a detector coupled to a towing interface of the vehicle.

Optionally in some examples, including in at least one preferred example, the parking brake control arrangement may comprise a switching arrangement controllable to connect a power source to an actuator of the parking brake of the vehicle. A technical benefit may include that this is a reliable way of controlling the automatic engagement of the parking brake of the vehicle.

Optionally in some examples, including in at least one preferred example, the switching arrangement may comprise a plurality of controllable switches, the switches being arranged to connect the power source to the actuator of the parking brake of the vehicle in response to the first indication indicating that the driver is absent from the driver's seat, the second indication indicating that the vehicle is in motion, and the third indication indicating that the vehicle is not in the towing mode. A technical benefit may include that this is a reliable way of controlling the automatic engagement of the parking brake of the vehicle.

Optionally in some examples, including in at least one preferred example, parking brake control arrangement may comprise a switching arrangement controllable to connect a power source to an actuator of the parking brake of the vehicle, the switching arrangement including: a first switch controllable from a non-conducting state to a conducting state in response to receiving an indication that the driver is likely not sitting in the driver's seat; a second switch coupled in series with the first switch, and controllable from a non-conducting state to a conducting state in response to receiving an indication that the seat belt of the driver's seat is unlocked; a third switch coupled in series with the first switch and the second switch, and controllable from a non-conducting state to a conducting state in response to receiving the indication that the vehicle is in motion; and a fourth switch coupled in series with the first, second, and third switches, controllable from a non-conducting state to a conducting state in response to receiving the indication that the vehicle is not in the towing mode. A technical benefit may include that this is a reliable and convenient way of controlling the automatic engagement and disengagement of the parking brake of the vehicle, reducing the risk of damage to the vehicle during towing, as compared to vehicles equipped with known systems for automatically engaging the parking brake in response to detecting that the driver has left the cabin.

Optionally in some examples, including in at least one preferred example, the parking brake control arrangement according to examples of the present disclosure may be included in a parking brake system for a heavy duty vehicle, further comprising: an air reservoir arrangement for storing pressurized air for operation of the parking brake system; an air brake chamber configured to engage a parking brake of the vehicle when an air pressure inside the air brake chamber is lower than a predefined parking brake threshold pressure. The parking brake control arrangement is arranged to control, when the first indication indicates that the driver is absent from the driver's seat, the second indication indicates that the vehicle is in motion, and the third indication indicates that the vehicle is not in the towing mode, the air pressure inside the air brake chamber to become lower than the predefined parking brake threshold pressure.

Optionally in some examples, including in at least one preferred example, the parking brake system may comprise a flow control device connected to the air reservoir arrangement via a first fluid conduit and connected to the air brake chamber via a second fluid conduit, the flow control device being controllable between a first state in which it allows flow of air from the air reservoir arrangement into the second fluid conduit, and a second state in which it allows air from the second fluid conduit to be discharged from the parking brake system; and the parking brake control arrangement is configured to control the flow control device to the second state when the first indication indicates that the driver is absent from the driver's seat, the second indication indicates that the vehicle is in motion, and the third indication indicates that the vehicle is not in the towing mode.

Optionally in some examples, including in at least one preferred example, the flow control device may comprise an actuator configured to transition the flow control device from the first state to the second state when the actuator is connected to a power source; and the parking brake control arrangement may comprise a switching arrangement controllable to connect a power source to the actuator of the flow control device.

Optionally in some examples, including in at least one preferred example, the parking brake control arrangement may comprise a switching arrangement controllable to connect a power source to the actuator of the flow control device, the switching arrangement including: a first switch controllable from a non-conducting state to a conducting state in response to receiving an indication that the driver is likely not sitting in the driver's seat; a second switch coupled in series with the first switch, and controllable from a non-conducting state to a conducting state in response to receiving an indication that the seat belt of the driver's seat is unlocked; a third switch coupled in series with the first switch and the second switch, and controllable from a non-conducting state to a conducting state in response to receiving the indication that the vehicle is in motion; and a fourth switch coupled in series with the first, second, and third switches, and controllable from a non-conducting state to a conducting state in response to receiving the indication that the vehicle is not in the towing mode. A technical benefit may include that this is a reliable and convenient way of controlling the automatic engagement and disengagement of the parking brake of the vehicle, reducing the risk of damage to the vehicle during towing, as compared to vehicles equipped with known systems for automatically engaging the parking brake in response to detecting that the driver has left the cabin.

Optionally in some examples, including in at least one preferred example, the parking brake system may comprise a power source connected to the switching arrangement of the parking brake control arrangement.

Optionally in some examples, including in at least one preferred example, the actuator of the flow control device may comprise a solenoid.

Optionally in some examples, including in at least one preferred example, the parking brake system may be comprised in a vehicle further including vehicle wheels. The parking brake system may be actuatable to brake at least one of the vehicle wheels.

Optionally in some examples, including in at least one preferred example, the vehicle may comprise an alert system configured to provide an alert external to the vehicle in response to the parking brake control arrangement of the parking brake system controlling the parking brake of the vehicle from the disengaged state to the engaged state. A technical benefit may include that persons in the vicinity of the vehicle may be warned, enabling them to stay out of the way until the vehicle has come to a stop.

According to a second aspect of the disclosure, there is provided a method of controlling operation of a parking brake of a vehicle, the method comprising: receiving a first indication of whether or not a driver of the vehicle is present in a driver's seat of the vehicle; receiving a second indication of whether or not the vehicle being in motion; receiving a third indication of whether or not the vehicle is in a towing mode; and controlling, when the first indication indicates that the driver is absent from the driver's seat, the second indication indicates that the vehicle is in motion, and the third indication indicates that the vehicle is not in the towing mode, the parking brake of the vehicle from a disengaged state to an engaged state. The second aspect of the disclosure may seek to provide for improved automatic activation of the parking brake of a vehicle. A technical benefit may include that automatic activation of the parking brake may be prevented when it has been indicated that the vehicle is to be towed. Hereby, it can be prevented that the parking brake is engaged when towing starts while the driver is not in the driver's seat of the vehicle. This may in turn reduce the risk of vehicle damage resulting from towing.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle according to an example.
**FIG. 2** is an exemplary parking brake system according to an example.
**FIG. 3** is an exemplary method according to an example.
**FIG. 4** is an exemplary parking brake system according to an example.
**FIG. 5** is an exemplary parking brake system according to an example.

### DETAILED DESCRIPTION

The detailed description set forth below provides information and examples of the disclosed technology with sufficient detail to enable those skilled in the art to practice the disclosure.

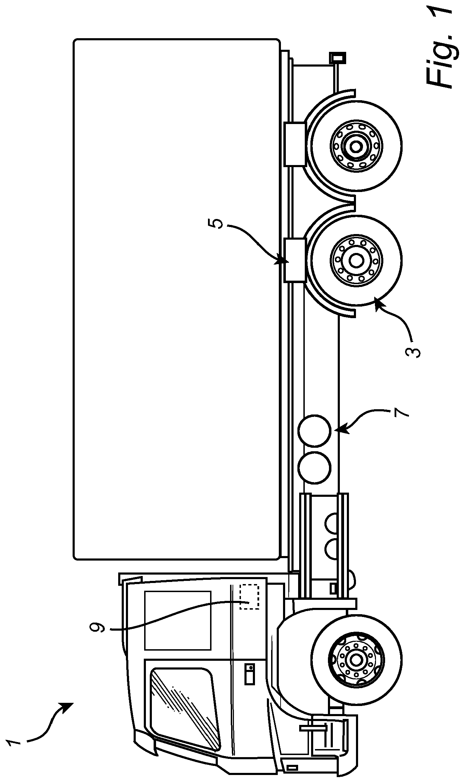

**FIG. 1** is an exemplary vehicle according to an example. The vehicle 1, here in the form of a truck, comprises at least one vehicle wheel 3, a parking brake system 5, an air reservoir arrangement 7, and a parking brake control arrangement 9. The parking brake control arrangement 9 may be considered to be included in the parking brake system 5, and is adapted to control operation of the parking brake system 5.

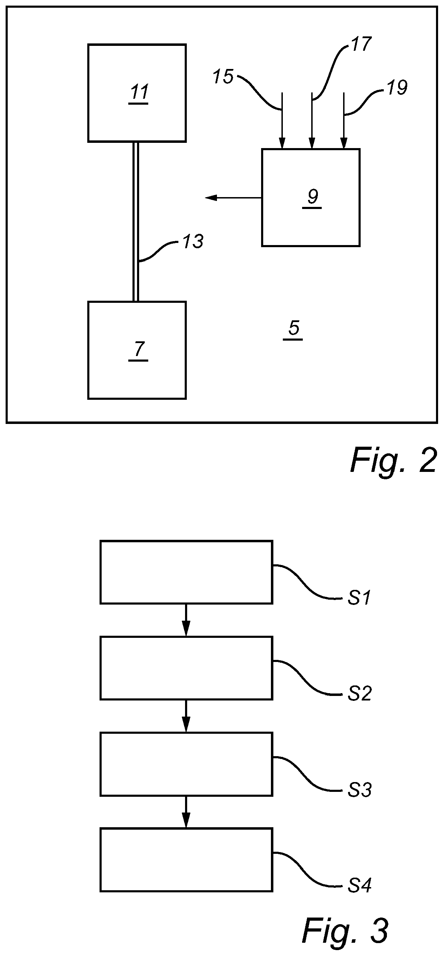

**FIG. 2** is an exemplary parking brake system 5 according to an example. Referring to FIG. 2, the exemplary parking brake system 5 comprises the above-mentioned air reservoir arrangement 7, the above-mentioned parking brake control arrangement 9, an air brake chamber 11, and fluid conduit 13 connecting the air reservoir 7 and the air brake chamber 11. Although not explicitly shown in FIG. 2, it should be understood that the parking brake system 5 can generally be manually controlled by the driver to allow the driver to engage the parking brake when the vehicle 1 has, for example, been parked. For instance, in the case of a delivery, the driver would normally manually engage the parking brake before leaving the cabin of the vehicle 1 to unload items to be delivered. To address the possibility that the driver may forget to manually engage the parking brake before leaving the cabin of the vehicle 1, it is, *per se*, known to automatically engage the parking brake when receiving an indication that the driver has left the cabin.

Normally, this condition for automatically engaging the parking brake (that the driver has left the cabin) may be sufficient. The present inventors have, however, realized that the, *per se*, known automatic engagement of the parking brake when receiving an indication that the driver has left the cabin, has certain drawbacks. In particular, the present inventors have realized that the driver is likely to leave the cabin of a vehicle that is about to be towed, before towing, and that automatic engagement of the parking brake in that situation would be likely to result in serious damage to the vehicle.

To address this problem, and to provide for a reduced risk of vehicle damage resulting from towing, examples of the parking brake control arrangement according to the present disclosure uses an indication of whether or not the vehicle is in a towing mode as an additional condition for automatic engagement of the parking brake.

Referring to FIG. 2, the parking brake control arrangement 9 is configured to receive a first indication 15, a second indication 17, and a third indication 19. The first indication 15 indicates whether or not the driver of the vehicle 1 is present in the driver's seat of the vehicle 1, the second indication 17 indicates whether or not the vehicle 1 is in motion, and the third indication 19 indicates whether or not the vehicle 1 is in the above-mentioned towing mode. The first indication 15 may, for example, be a weight indication from a weight sensor (not shown) in the driver's seat, or a seat belt indication from a seat belt switch (not shown), or a logical combination of such indications. The second indication 17 may be an indication from one or more wheel sensors (not shown). The third indication 19 may be an indication from a manually operated towing switch (not shown), or an indication that may be provided automatically when the vehicle 1 to be towed is coupled to a tow truck.

The parking brake control arrangement 9 is configured to control the parking brake of the vehicle 1 from a disengaged state to an engaged state, when the first indication 15 indicates that the driver is absent from the driver's seat, the second indication 17 indicates that the vehicle 1 is in movement, and the third indication 19 indicates that the vehicle 1 is not in the towing mode. In the exemplary case of FIG. 2, where the parking brake system 5 of the vehicle 1 is an air brake system, the parking brake control arrangement 9 may directly control the air brake chamber 11, and/or may control flow of air along at least a portion of the fluid conduit 13 that is connected to the air brake chamber 11.

**FIG. 3** is an exemplary method according to an example. According to the exemplary method, a first indication 15 of whether or not a driver of the vehicle 1 is present in a driver's seat of the vehicle 1 is received S1. A second indication 17 of whether or not the vehicle 1 being in motion is received S2. A third indication 19 of whether or not the vehicle 1 is in a towing mode is received S3. The indications are received by the parking brake control arrangement 9, which controls S4, when the first indication 15 indicates that the driver is absent from the driver's seat, the second indication 17 indicates that the vehicle 1 is in motion, and the third indication 19 indicates that the vehicle 1 is not in the towing mode, the parking brake of the vehicle 1 from a disengaged state to an engaged state.

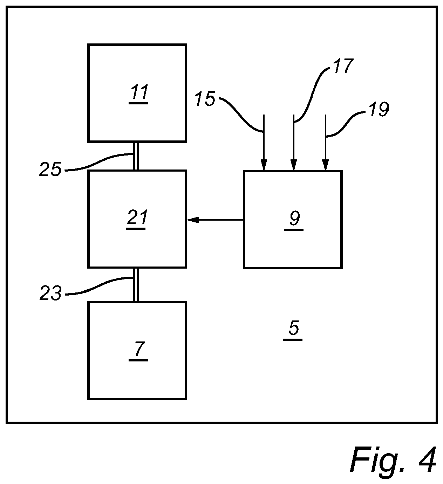

**FIG. 4** is an exemplary parking brake system 5 according to an example. The difference between the exemplary parking brake system 5 in FIG. 4 and that in FIG. 2 is that the parking brake system 5 comprises a flow control device 21. As is indicated in FIG. 4, the flow control device 21 is connected to the air reservoir arrangement 7 via a first fluid conduit 23 and connected to the air brake chamber 11 via a second fluid conduit 25. The flow control device 21 is controllable between a first state in which it allows flow of air from the air reservoir arrangement 7 into the second fluid conduit 25, and a second state in which it allows air from the second fluid conduit 25 to be discharged from the parking brake system.

The parking brake control arrangement 9 is configured to control the flow control device 21 to the second state when the first indication 15 indicates that the driver is absent from the driver's seat, the second indication 17 indicates that the vehicle 1 is in motion, and the third indication 19 indicates that the vehicle 1 is not in the towing mode. The parking brake control arrangement 9 may additionally be configured to control the flow control device 21 to the first state when the first indication 15 indicates that the driver is present in the driver's seat, or the second indication 17 indicates that the vehicle is stationary, or the third indication 19 indicates that the vehicle 1 is in the towing mode.

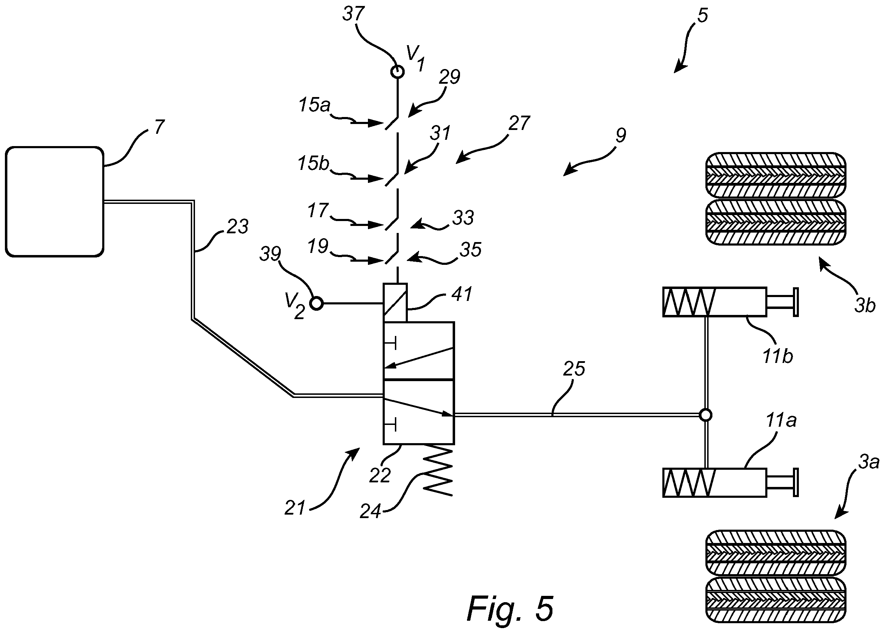

**FIG. 5** is an exemplary parking brake system 5 according to an example. In FIG. 5, the parking brake system 5 is indicated as comprising a first air brake chamber 11a coupled to a first vehicle wheel 3a, and a second air brake chamber 11b coupled to a second vehicle wheel 3b. As is common in air brake systems, the schematically illustrated air brake chambers 3a-b operate by actuating the brakes of the respective wheels 3a-b when the air pressure inside the respective air brake chambers 11a-b falls below a predefined parking brake threshold pressure. The air pressure inside the air brake chambers 11a-b is controlled using a flow control device 21.

In the exemplary parking brake system in FIG. 5, the flow control device 21 is exemplified as comprising a directional control valve 22, a spring 24, and an actuator 41, here in the form of a solenoid. The spring 24 urges the directional control valve 22 to the position indicated in FIG. 5, where the directional control valve 22 connects the air reservoir to the air brake chambers 11a-b, via the first fluid conduit 23 and the second fluid conduit 25, to thereby maintain the pressure inside the air brake chambers 1 1a-b, keeping the parking brakes of the wheels 3a-b disengaged. When the actuator 41 is energized, it pushes the directional control valve 22 away, compressing the spring 24 and connecting the air brake chambers 11a-b to the surroundings via the second fluid conduit, thereby allowing the pressure inside the air brake chambers 11a-b to fall below the parking brake threshold pressure. This results in the air brake chambers 11a-b actuating the brakes of the wheels 3a-b.

In the example configuration of FIG. 5, the actuator 41, in this example a solenoid, is energized when the switching arrangement 27 of the parking brake control arrangement 9 connects the actuator 41 to a power source. In FIG. 5, the power source is represented by a first potential V1 and a second potential V2. The switching arrangement 27 comprises a first switch 29, a second switch 31, a third switch 33, and a fourth switch 35, all coupled in series between a power source terminal (in this case V1) and the actuator 41. Each of the switches is controllable between a non-conducting state and a conducting state, and current can only flow through the actuator when each of the switches is in its conducting state.

In FIG. 5, the first switch 29 is controllable from its non-conducting state to its conducting state in response to receiving an indication 15a that the driver is likely not sitting in the driver's seat, the second switch 31 is controllable from its non-conducting state to its conducting state in response to receiving an indication 15b that the seat belt of the driver's seat is unlocked, the third switch 33 is controllable from its non-conducting state to its conducting state in response to receiving an indication 17 that the vehicle is in motion, and the fourth switch 35 is controllable from its non-conducting state to its conducting state in response to receiving an indication 19 that the vehicle is not in the towing mode. As is clear from the simplified circuit diagram in FIG. 5, all of these conditions need to be fulfilled for the actuator 41 to be energized and shift the directional control valve 22 to let air out of the air brake chambers 11a-b. When at least one condition is no longer fulfilled, such as if the vehicle 1 is in the towing mode, the actuator 41 will be disconnected from the power source, allowing the spring 24 to shift the directional control valve 22 back to the state illustrated in FIG. 5, where pressurized air from the air reservoir 7 is provided to the air brake chambers 1 1a-b, causing the air brake chambers 11a-b to disengage the brakes of the wheels 3 a-b.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with ∑their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A parking brake control arrangement (9) for controlling operation of a parking brake (5) of a vehicle (1), configured to:
receive a first indication (15) of whether or not a driver of the vehicle (1) is present in a driver's seat of the vehicle (1);
receive a second indication (17) of whether or not the vehicle being in motion;
receive a third indication (19) of whether or not the vehicle (1) is in a towing mode; and
control, when the first indication (15) indicates that the driver is absent from the driver's seat, the second indication (17) indicates that the vehicle (1) is in movement, and the third indication (19) indicates that the vehicle (1) is not in the towing mode, the parking brake (5) of the vehicle (1) from a disengaged state to an engaged state.

2. The parking brake control arrangement (9) of claim 1, the first indication (15) indicating that the driver is absent from the driver's seat when a weight sensor in the driver's seat indicates that the driver is likely not sitting in the driver's seat and a seat belt sensor indicates that a seat belt of the driver's seat is unlocked.

3. The parking brake control arrangement (9) of claim 1 or 2, the parking brake control arrangement (9) being configured to:
control, when the first indication (15) indicates that the driver is absent from the driver's seat, the second indication (17) indicates that the vehicle (1) is in motion, and the third indication (19) indicates that the vehicle (1) is in the towing mode, the parking brake (5) of the vehicle (1) to be in the disengaged state.

4. The parking brake control arrangement (9) of any one of claims 1 to 3, the parking brake control arrangement (9) being configured to:
control, when the first indication (15) indicates that the driver is present in the driver's seat, or the second indication (17) indicates that the vehicle (1) is stationary, or the third indication (19) indicates that the vehicle is in the towing mode, the parking brake (5) of the vehicle (1) from the engaged state to the disengaged state.

5. The parking brake control arrangement (9) of any one of claims 1 to 4, the parking brake control arrangement (9) comprising:
a switching arrangement (27) controllable to connect a power source (37) to an actuator (41) of the parking brake (5) of the vehicle (1).

6. The parking brake control arrangement (9) of claim 5, the switching arrangement (27) comprising a plurality of controllable switches, the switches being arranged to connect the power source (37) to the actuator (41) of the parking brake (5) of the vehicle (1) in response to the first indication (15) indicating that the driver is absent from the driver's seat, the second indication (17) indicating that the vehicle (1) is in motion, and the third indication (19) indicating that the vehicle (1) is not in the towing mode.

7. The parking brake control arrangement (9) of claim 2, the parking brake control arrangement (9) comprising a switching arrangement (27) controllable to connect a power source (37) to an actuator (41) of the parking brake (5) of the vehicle (1), the switching arrangement (27) including:
a first switch (29) controllable from a non-conducting state to a conducting state in response to receiving an indication (15a) that the driver is likely not sitting in the driver's seat;
a second switch (31) coupled in series with the first switch (29), and controllable from a non-conducting state to a conducting state in response to receiving an indication (15b) that the seat belt of the driver's seat is unlocked;
a third switch (33) coupled in series with the first switch (29) and the second switch (31), and controllable from a non-conducting state to a conducting state in response to receiving the indication (17) that the vehicle (1) is in motion; and
a fourth switch (35) coupled in series with the first (29), second (31), and third (33) switches, controllable from a non-conducting state to a conducting state in response to receiving the indication (19) that the vehicle (1) is not in the towing mode.

8. A parking brake system (5) for a heavy duty vehicle (1), comprising:
an air reservoir arrangement (7) for storing pressurized air for operation of the parking brake system (5);
an air brake chamber (11) configured to engage a parking brake of the vehicle (1) when an air pressure inside the air brake chamber (11) is lower than a predefined parking brake threshold pressure; and
the parking brake control arrangement (9) of any one of claims 1 to 7 arranged to control, when the first indication (15) indicates that the driver is absent from the driver's seat, the second indication (17) indicates that the vehicle is in motion, and the third indication (19) indicates that the vehicle (1) is not in the towing mode, the air pressure inside the air brake chamber (11) to become lower than the predefined parking brake threshold pressure.

9. The parking brake system (5) of claim 8, wherein:
the parking brake system (5) comprises a flow control device (21) connected to the air reservoir arrangement (7) via a first fluid conduit (23) and connected to the air brake chamber (11) via a second fluid conduit (25), the flow control device (21) being controllable between a first state in which it allows flow of air from the air reservoir arrangement (7) into the second fluid conduit (25), and a second state in which it allows air from the second fluid conduit (25) to be discharged from the parking brake system (5); and
the parking brake control arrangement (9) is configured to control the flow control device (21) to the second state when the first indication (15) indicates that the driver is absent from the driver's seat, the second indication (17) indicates that the vehicle (1) is in motion, and the third indication (19) indicates that the vehicle (1) is not in the towing mode.

10. The parking brake system (5) of claim 9, wherein:
the flow control device (21) comprises an actuator (41) configured to transition the flow control device (21) from the first state to the second state when the actuator (41) is connected to a power source (37); and
the parking brake control arrangement (9) comprises a switching arrangement (27) controllable to connect a power source (37) to the actuator (41) of the flow control device (21).

11. The parking brake system (5) of claim 10, the parking brake control arrangement (9) comprising a switching arrangement (21) controllable to connect a power source (37) to the actuator (41) of the flow control device (21), the switching arrangement (27) including:
a first switch (29) controllable from a non-conducting state to a conducting state in response to receiving an indication (15a) that the driver is likely not sitting in the driver's seat;
a second switch (31) coupled in series with the first switch (29), and controllable from a non-conducting state to a conducting state in response to receiving an indication (15b) that the seat belt of the driver's seat is unlocked;
a third switch (33) coupled in series with the first switch (29) and the second switch (31), and controllable from a non-conducting state to a conducting state in response to receiving the indication (17) that the vehicle (1) is in motion; and
a fourth switch (35) coupled in series with the first (29), second (31), and third (33) switches, and controllable from a non-conducting state to a conducting state in response to receiving the indication (19) that the vehicle (1) is not in the towing mode.

12. The parking brake system (5) of claim 10 or 11, comprising a power source (37) connected to the switching arrangement (27) of the parking brake control arrangement (9).

13. A vehicle (1) comprising:
vehicle wheels (3); and
the parking brake system (5) of any of claims 8 to 13 actuatable to brake at least one of the vehicle wheels (3).

14. The vehicle (1) of claim 13, comprising an alert system configured to provide an alert external to the vehicle (1) in response to the parking brake control arrangement (9) of the parking brake system (5) controlling the parking brake of the vehicle (1) from the disengaged state to the engaged state.

15. A method of controlling operation of a parking brake (5) of a vehicle (1), the method comprising:
receiving (S1) a first indication (15) of whether or not a driver of the vehicle (1) is present in a driver's seat of the vehicle (1);
receiving (S2) a second indication (17) of whether or not the vehicle (1) being in motion;
receiving (S3) a third indication (19) of whether or not the vehicle (1) is in a towing mode; and
controlling (S4), when the first indication (15) indicates that the driver is absent from the driver's seat, the second indication (17) indicates that the vehicle (1) is in motion, and the third indication (19) indicates that the vehicle (1) is not in the towing mode, the parking brake (5) of the vehicle (1) from a disengaged state to an engaged state.
